# EUROPEAN PATENT APPLICATION

(11) **EP 4 629 404 A1**
(43) Date of publication of application: **08.10.2025**
(21) Application number: 24315116.4
(22) Date of filing: 03.04.2024
(51) Int. Cl.: H01M 14/00, C25B 5/00

(54) **GREEN ELECTRIC VOLTAGE SOURCE**

(71) Applicant: Dufour, Jacques Julien, 75014 Paris (FR); Vinko, Jenny D., 75014 Paris (FR)
(72) Inventor: Dufour, Jacques Julien, 75014 Paris (FR); Vinko, Jenny D., 75014 Paris (FR)

(57) **Abstract**

A method and an apparatus to generate an electric voltage by contacting the inside of a closed mild carbon steel tube at a temperature between 250°C and 1200°C with di-Hydrogen obtained by electrolysis of pure water, said di-Hydrogen being at a pressure between 0 and 10 Bar gauge.

## Description

The present invention is concerning electric voltage source and its production. In particular, it concerns an apparatus allowing the generation of an electric voltage which is not connected to the existing main electric network. It also relates to a method using said apparatus, for generating a green and abundant electric voltage.

There is a need for a Green, Abondant and Cheap Electric Voltage Source.

This Electric Voltage source could be used, (in combination with wind and sun) in all fields where an Electric Voltage is required. Such fields of application include, without limitation:
- Heavy industry like Siderurgy or Ciment Production.
- Transports (cars, planes) by using modern Fisher Tropsh synthesis, that finally produces green fuels (Gasoline, Kerosene,Diesel)
- Domestic heating as a back-up of wind turbines and solar panels.

The Electric Voltage source according to the present invention is not connected to the existing main electric network, making this source independent from the fluctuations of this main electric network. This is a great advantage 1for industrial applications like Siderurgy, Cement Production and Fisher Tropsh synthesis, as exemples.

The fuel used in the Electric Voltage source is Mild Carbon Steel. Iron is very abundant in nature (ranking 4th in abondance-5,1%-in the earth crust) and widely spreaded making its availability not submitted to geographic distribution. Iron is the main component of Mild Carbon Steel.

An object of the present invention is therefore an apparatus (or device) to generate an electric voltage by contacting the inside of a closed mild carbon steel tube at a temperature between 250°C and 1200°C with di-Hydrogen obtained by electrolysis of pure water, said di-Hydrogen being at a pressure between 0 and 10 Bar gauge.

Another object of the present invention is a method for generating an electric voltage comprising a step of contacting the inside of a closed mild carbon steel tube at a temperature between 250°C and 1200°C with di-Hydrogen, said di-Hydrogen being obtained by electrolysis of pure water, and said di-Hydrogen being at a pressure between 0 and 10 Bar gauge.

According to an advantageous embodiment, the mild carbon steel tube has a length comprised between 0,5 and 10 m, a diameter comprised between 1 and 5 cm and is connected to a DC (direct current) power supply with return to the ground of the system through a resistor and then a diode.

The invention and the apparatus used to generate the electric voltage is now described in detail.

Two Mild Carbon Steel tubes with same length L are used. The inner tube has diameters dᵢ (inside) and dₒᵤₜ (outside). The outer tube has diameters Dᵢ (inside) and Dₒᵤₜ (outside). The tubes are positioned so that they have the same axis. The gap between the outer surface of the inner tube and the inner surface of the outer tube is thus (Di-dₒᵤₜ)/2 with the proviso that (dₒᵤₜ < Dᵢ). The extremities of the tubes are closed, preferably by high temperature cement. The outer surface of the outer tube is in contact with a non-oxidising atmosphere.

The outer tube surface (diameter Dₒᵤₜ) is connected to an DC (DC meaning "direct current") power supply with return to the ground of this DC power supply through first a resistance that measures the electric voltage generated and then through a diode.

On the outside surface of the inner tube (diameter dₒᵤₜ) filets are machined. The inner tube is electrically connected to the ground. The gap between the inner tube filets and the outer tube inside surface is maintained by ceramic cylinders. The extremities of the tubes are sealed together, preferably by high temperature cement.

In some embodiments, a closed mild carbon steel tube with filets machined on it's outer surface is inserted into the mild carbon steel tube so that the gap between the 2 tubes is comprised between 0,25 and 5 mm.

In some embodiments, the closed mild carbon steel tube has holes for di-Hydrogen passage and is connected to the di-Hydrogen alimentation, through an insulated high temperature electrical crossing.

Di-Hydrogen is fed into the inner tube which has holes so that Di-hydrogen can fill the gap between the 2 tubes. The tubes are placed in a furnace.

Di-Hydrogen obtained by electrolysis of pure demineralised water is introduced into the inner tube through an electrically insulated tubing (high temperature cement and high temperature fibers).

The invention can further comprise the recovery of the product of reaction from the mild carbon steel tube.

The method as disclosed here-above is performed in the apparatus according to the invention.

## Claims

1. A method for generating an electric voltage comprising a step of contacting the inside of a closed mild carbon steel tube at a temperature between 250°C and 1200°C with di-Hydrogen, said di-Hydrogen being obtained by electrolysis of pure water, and said di-Hydrogen being at a pressure between 0 and 10 Bar gauge

2. An apparatus to generate an electric voltage by the method according to claim 1 by contacting the inside of a closed mild carbon steel tube at a temperature between 250°C and 1200°C with di-Hydrogen obtained by electrolysis'of pure water, said di-Hydrogen being at a pressure between 0 and 10 Bar gauge.

3. The apparatus according to claim 2 wherein the mild carbon steel tube has a length comprised between 0,5 and 10 m, a diameter comprised between 1 and 5 cm and is connected to a DC (direct current) power supply with return to the ground of the system through a resistor and then a diode.

4. Apparatus according to any of claim 2 or 3, wherein a closed mild carbon steel tube with filets machined on it's outer surface is inserted into the mild carbon steel tube so that the gap between the 2 tubes is comprised between 0,25 and 5 mm.

5. Apparatus according to claim 4, wherein the closed mild carbon steel tube has holes for di-Hydrogen passage and is connected to the di-Hydrogen alimentation, through an insulated high temperature electrical crossing.

6. The method according to claim 1, further comprising the recovery of the product of reaction from the mild carbon steel tube.

7. The method according to claim 6, wherein the method is performed in an apparatus according to any of claims 2 to 5.

## Amended claims

### Amended claims in accordance with Rule 137(2) EPC.

1. Process for generating a green positive electric voltage source comprising a step of contacting the inner part of a mild carbon steel tube with the positive end of the plasma of a DC glow discharge, said Hydrogen and mild carbon steel tube being at a temperature between 250°C and 1200°C and said hydrogen being at a pressure between 0 and 10 bar gauge.

2. Process according to Claim 1 where a positive electric voltage of 414 V (40000/96,485) is created by photo-electric effect occuring at the positive end of the glow discharge where the synthesis of FeH occurs, part of this electric voltage being used to power the synthesis of FeH and the rest to generate Hydrogène by electrolyse of water. The positive electric voltage thus created is connected to the commun ground of the system through a diode, said diode only allowing the high positive electric voltage electrons created to flow to said commun ground.

3. Aparatus to carry out the process accordind to clains 1 and 2 consisting of a heat exanger the shell being filled with hydrogen according to Claim 1 and containing a beam of concentric tubes as discribed in Claims 1 an 2, said heat exchanger being kept at the required temperature by the heat generated by the Fischer-Tropsch synthesis.

4. Aparatus acording to claim 1 powered by a fraction of the electric power generated accordind to claims 1,2 and 3 exept for starting the process. Recovering the product of reaction from the external mild carbon steel tubes of the beam for further utilisation
